# EUROPÄISCHE PATENTSCHRIFT

(11) **EP 1 117 577 B1**
(45) Veröffentlichungstag und Bekanntmachung des Hinweises auf die Patenterteilung: **29.03.2006**
(21) Anmeldenummer: 00952883.7
(22) Anmeldetag: 01.07.2000
(51) Int. Cl.: B60S 1/40

(54) **WISCHVORRICHTUNG FÜR SCHEIBEN VON KRAFTFAHRZEUGEN MIT EINEM ZWISCHEN UMKEHRLAGEN BEWEGBAREN, ZUR SCHEIBE BELASTETEN WISCHERARM**
WIPING DEVICE FOR THE GLASS SURFACES OF MOTOR VEHICLES, COMPRISING A WIPING ARM THAT CAN BE MOVED BETWEEN REVERSIBLE POSITIONS AND THAT IS LOADED TOWARDS THE GLASS SURFACE
DISPOSITIF ESSUIE-GLACE POUR LES VITRES DE VEHICULES A MOTEUR, DOTE D'UN BRAS D'ESSUIE-GLACE CONTRAINT EN DIRECTION DE LA VITRE ET MOBILE ENTRE DES POSITIONS D'INVERSION DE SENS

(30) Priorität: 30.07.1999 DE 19935861
(43) Veröffentlichungstag der Anmeldung: 25.07.2001
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE2000/002150
(87) Internationale Veröffentlichungsnummer: WO 2001/008950

(56) Entgegenhaltungen:
- DE-A- 19 729 865
- GB-A- 2 238 953
- US-A- 4 300 259
- US-A- 5 636 407

## Beschreibung

### Stand der Technik

Bei Wischvorrichtungen der im oberbegriff des Anspruchs 1 bezeichneten Art soll durch die Begrenzung der quer zur Wischrichtung notwendigen Schwingbewegung verhindert werden, daß bei einer bestimmten Montagestellung, wenn das Wischblatt zusammen mit dem Wischerarm von der Scheibe abgehoben ist, sich das Wischblatt bei unsachgemäßer Handhabung um die Schwingachse bewegt, bis seine Lagerzapfen selbständig durch die Öffnung der Lagerausnehmungen gelangen. Dadurch kann sich das Wischblatt ungewollt vom Wischerarm lösen herunterfallen und beispielsweise die Lackierung des Fahrzeuge beschädigen.

Die Erfindung geht aus von eine; Wischvorrichtung nach dem Oberbegriff des Anspruchs 1, wie sie aus der GB-A-2 238 953 bekannt sind. Bei einer bekannten, hinsichtlich der Schwinglagerung jedoch anders ausgebildeten wischvorrichtung (DE 19 053 52 A1) taucht das freie Ende des Wischerarms zwischen mit Abstand von einander befindliche Wangen eines zum Wischblatt gehörenden Traggestells, aus deren einander zugewandten Innenseiten gegeneinander gerichtete, warzenartige Stütznasen ragen, welche nach der Montage des Wischblatts am Wischerarm in an Führungswänden des Wischerarms vorhandenen Langlöchern bewegbar sind, durch deren Länge die Schwingbewegung begrenzt ist. Die Lösung des Eingangs dargelegten Problems erfordert zur Realisierung der Begrenzungsmittel somit bestimmte Konstruktionsmerkmale sowohl beim Wischblatt (Traggestellwangen) als auch beim Wischerarm (Anordnung zwischen den Wangen).

### Vorteile der Erfindung

Bei der erfindungsgemäßen Wischvorrichtung mit den kennzeichnenden Merkmalen des Anspruchs 1 ist die Ausgestaltung von Wischblatt und Wischerarm belanglos, weil durch die Anordnung von Wischblatt und Wischerarm nebeneinander eine optisch unauffällige, mit konstruktiv geringem Aufwand realisierbare Anordnung der Anschläge und Gegenanschläge an den beiden Vorrichtungsteilen möglich ist.

Zweckmäßig sind die Anschläge am Wischerarm angeordnet und die Gegenanschläge am Wischerblatt ausgebildet.

Ein besonders einfacher Aufbau der erfindungsgemäßen Wischvorrichtung ergibt sich, dadurch, daß an dem Wischerarm zwei sich zum Wischblatt erstreckende, die Anschläge bildende Zungen angeordnet sind, welche sich mit Abstand von der Scheibe in die Schwingebene des Wischblatts erstrecken und wenn weiter der zur Scheibe senkrecht gemessene Abstand zwischen den einander zugewandten Zungenflächen größer ist als der Abstand zwischen den am Wischblatt vorhandenen, sich zwischen den Zungen befindlichen Gegenanschlägen des Wischblatts.

Eine weitere Vereinfachung der Wischvorrichtung ist gegeben, wenn das Wischblatt mit Abstand von der zu wischenden Schei-be mit einem bandartig langgestreckten, federelastischen Tragelement für eine an der Scheibe anlegbare, gummielastische Wischleiste versehen ist wobei sich das Tragelement mit einem Vorsprung über die Breite der Wischleiste hinaus zwischen die einander zugewandten Flächen der Zungen erstreckt und wenn schließlich an dem Vorsprung die Gegenanschläge des Wischblatts ausgebildet sind.

Eine besonders kostengünstige, montagefreundliche Möglichkeit der Zungenanordnung ergibt sich, wenn diese beiden Zungen durch Verlängerung der Schenkel einer am Wischerarm befestigten, den Wischerarm umgreifenden, im Querschnitt U-förmigen Klammer gebildet sind.

Als Verschiebesicherung der Klammer in Längsrichtung des Wischerarms ist es von Vorteil, wenn diese eine in Längsrichtung des Wischerarms weisende Sicherungsschulter hat, die mit einer ihr zugewandten Gegenschulter des Wischerarms zusammen wirkt.

Wenn die Klammer aus einem elastischen Kunststoff hergestellt ist, ergibt sich eine einfache Montage der Klammer am Wischerarm.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

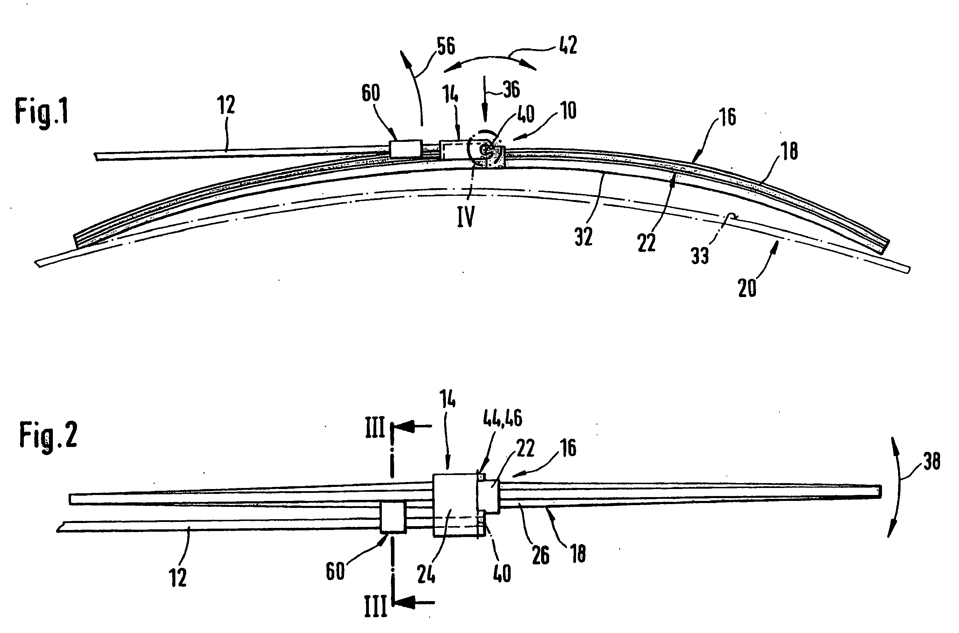

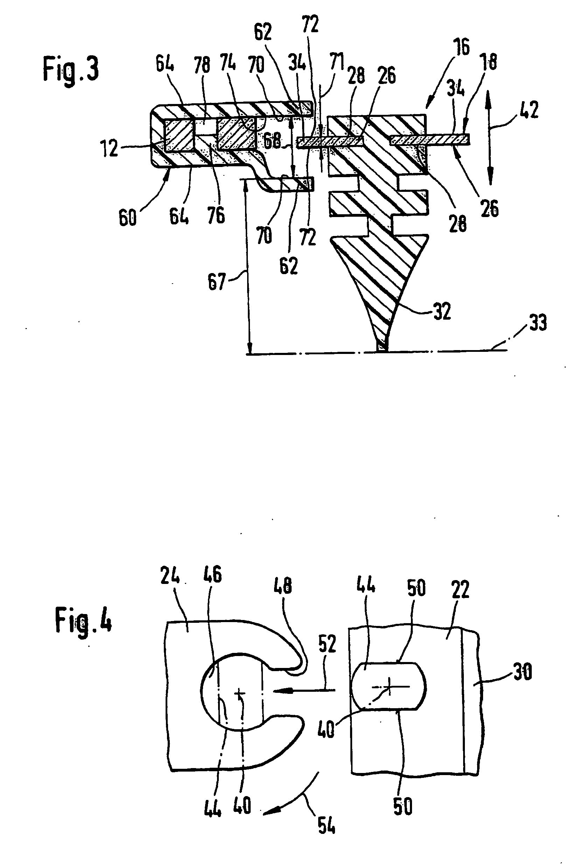

In der Zeichnung zeigen: Figur 1 eine Seitenansicht einer Wischvorrichtung mit einem Wischblatt und einem Wischerarm, Figur 2 eine Draufsicht auf die Anordnung gemäß Figur 1, Figur 3 die Schnittfläche eines Schnitts entlang der Linie III-III in Figur 2 durch die Wischvorrichtung in vergrößerter Darstellung um 90° gedreht gezeichnet und Figur 4 eine in Figur 1 mit IV bezeichnete Einzelheit in vergrößerter Darstellung, wobei jedoch das Wischblatt in einer Vormontageposition dargestellt ist.

### Beschreibung

Eine in den Figuren 1 und 2 dargestellte Wischvorrichtung 10 weist einen angetriebenen, zwischen Umkehrlagen bewegbaren Wischerarm 12 auf, an dessen freien Ende über eine Anschlußvorrichtung 14 eine Wischblatt 16 lösbar angelenkt ist. Das Wischblatt weist ein bandartig langgestrecktes, federelastisches Tragelement 18 auf, an dessen von der zu wischenden Scheibe 20 abgewandten Bandfläche und im Mittelabschnitt des Wischblatts das wischblattseitige Teil 22 der Anschlußvorrichtung 14 angeordnet ist. Das andere, wischerarmseitige Teil 24 der Anschlußvorrichtung 14 ist fest mit dem freien Ende des Wischerarms 12 verbunden. Wie Figur 3 zeigt, gehören zu dem Tragelement 18 zwei langgestreckte, federelastische Schienen 26, die jeweils in seitlichen Längsnuten 28 einer gummielastischen, mit einer Wischlippe 32 an der zu wischenden Oberfläche 33 der Scheibe 20 anlegbaren Wischleiste 30 liegen. Da sich die beiden Längsnuten 28 in einer gemeinsamen Ebene erstrecken, ergibt sich das schon erwähnte Tragelement 18, an dem das Teil 22 gehalten ist. Dies ist möglich, weil beide Federschienen 26 breiter sind als die Tiefe der Längsnuten 28. Deshalb ragen die Federschienen 26 mit leistenartigen Vorsprüngen 34 aus ihren Längsnuten 28 heraus. Ungeachtet des hier verwendeten, zwei separate Federschienen aufweisenden Tragelements ist die Erfindung natürlich auch bei einem einteiligen Tragelement realisierbar. Entscheidend ist die Anordnung der Anschläge und der Gegenanschläge am Wischerarm und am Wischblatt in einer die Schwingung des Blatts gegenüber dem Arm entsprechend begrenden Weise. Der Wischerarm 12 ist in Richtung des Pfeiles 36 zur Scheibe 20 belastet, so daß während des Wischbetriebs das Wischblatt mit seiner Wischlippe 32 ordnungsgemäß an der Scheibenoberfläche 33 angelegt ist. Da gemäß Figur 1 die strichpunktierte Linie 34 die stärkste Krümmung der Scheibenoberfläche darstellen soll ist klar ersichtlich, daß die Krümmung des nur mit seinen beiden Enden an der Scheibe anliegenden Wischblatts 16 stärker ist als die maximale Scheibenkrümmung. Unter dem Anpressdruck (Pfeil 36) legt sich das Wischblatt 16 mit seiner Wischlippe 32 über seine gesamte Länge an der Scheibenoberfläche 33 an. Dabei baut sich im bandartigen, federelastischen Tragelement 18 eine Spannung auf, welche für eine ordnungsgemäße Anlage der Wischleiste 30 beziehungsweise der Wischlippe 32 über deren gesamte Länge an der Kraftfahrzeugscheibe 20 sorgt. Weil die in aller Regel sphärisch gekrümmte Scheibe 20 nicht ein Abschnitt einer Kugeloberfläche darstellt, muß sich das Wischblatt 16 gegenüber dem Wischerarm 12 während seiner zur Längserstrekkung des Wischblatts quer verlaufenden Wischbewegung (Doppelpfeil 38 in Figur 2) ständig dem Verlauf der Scheibenoberfläche 33 anpassen können. Deshalb ist die Anschlußvorrichtung 14 gleichzeitig als Gelenkverbindung zwischen Wischblatt 16 und Wischerarm 12 ausgebildet. Die Achse 40 dieser Gelenkverbindung weist im wesentlichen in Wischrichtung, so daß das Wischblatt 16 gegenüber dem Wischerarm 12 eine Schwingbewegung entsprechend dem Doppelpfeil 42 (in Figur 1) ausführen kann, welche stets die notwendige Anlage des Wischblatts über dessen gesamte Länge an der Scheibenoberfläche 33 sicherstellt.

Um eine besonders niedrige Bauweise der Wischvorrichtung über der zu wischende Scheibenoberfläche zu erreichen ist - wie die Figuren 1 bis 3 zeigen - der Wischerarm 12 in Draufsicht bzw. senkrecht zur Scheibe gesehen neben dem Wischblatt 16 angeordnet. Auf den Aufbau der Gelenkverbindung zwischen Wischerarm und Wischblatt soll hier lediglich soweit eingegangen werden, als dies für das Verständnis der Erfindung erforderlich ist, weil derartige Gelenkverbindungen aus dem Stand der Technik - beispielsweise aus der DE 197 29 862.1 Al - bekannt sind. Bei der in Figur 4 vergrößert dargestellten Vormontageposition zwischen Wischblatt 16 und Wischerarm 12 beziehungsweise zwischen den beiden zur Anschlußvorrichtung 14 gehörenden Vorrichtungsteile 22 und 24 ist in Verbindung mit Figur 2 ersichtlich, daß das Wischblatt mit zwei zum Schwinggelenk 40 gehörenden, aus den Längsseiten des Wischblatts ragenden, mit einander fluchtenden und im Querschnitt unrunden Lagerzapfen 44 versehen ist. Gemäß der in Figur 4 strichpunktiert gezeichneten Lagerposition der Gelenkzapfen 44 ist erkennbar, daß diese in randoffenen Ausnehmungen 46 des Wischerarms beziehungsweise des wischerarmseitigen Vorrichtungsteils 24 geführt sind. Weiter ist ersichtlich, daß diese Einführöffnung 48 für die Ausnehmungen 46 auf das durch Anflachungen 50 der Lagerzapfen 44 bewirkte Kleinstmaß abgestimmt sind, während die kreisförmigen Ausnehmungen 46 mit dem Größtmaß der Lagerzapfen beziehungsweise mit deren Durchmessermaß harmonieren. Zum Erreichen der Gelenkverbindung zwischen Wischerarm und Wischblatt wird das Wischblatt entsprechend dem Montagepfeil 52 mit seinen Lagerzapfen 44 in die Ausnehmungen 46 eingeführt und dann in Richtung des Pfeiles 54 gedreht, so daß das Wischblatt in seine Betriebsposition gelangt wobei eine Montagesicherung des Wischblatts am Wischerarm durch die besondere Ausgestaltung der Lagerzapfen 44 zusammenwirkend mit der Formgebung für die Ausnehmungen 46 erreicht wird. Dieser Montagevorgang beziehungsweise der Demontagevorgang - welcher durch eine entsprechende Verdrehung des Wischblatts 16 gegenüber dem Wischerarm 12 möglich ist - kann nur erreicht werden, wenn der Wischerarm in Richtung des in Figur 1 mit 56 bezeichneten Schwenkpfeil aus seiner Arbeitsposition in eine Montageposition bewegt ist. Damit beim Wegklappen des mit dem Wischblatt 16 versehenen Wischerarms 12 von der Scheibe 20 in Richtung des Pfeils 56 sich das Wischblatt nicht unkontrolliert gegenüber dem Wischerarm verdrehen und sich von diesem lösen kann, ist an dem Wischerarm eine Sicherungsvorrichtung angeordnet. Beim Ausführungsbeispiel gehört zur Sicherungsvorrichtung eine in Querschnitt U-förmige Klammer 60 (Fig. 1 bis 3), welche den Wischerarm 12 quer zu dessen Längserstreckung dreiseitig umschließt und die sich mit zungenartigen Verlängerungen 62 ihrer U-Schenkel 64 bis in den Bereich eines Vorsprungs der ihr benachbarten Federschiene 26 erstreckt. Die beiden Zungen 62 bzw. deren einander zugewandten Innenflächen 70 liegen mit einem Abstand 67 vor der zu wischenden Scheibenoberfläche 33. Die Anordnung und Ausgestaltung der Klammer 60 ist so getroffen, daß der Vorsprung der Federschiene 26 zwischen den einander zugewandten Flächen 70 der Klammerzungen 62 liegt. Der Abstand 68 zwischen diesen Flächen 70 und die Positionierung der Klammer 60 am Wischerarm 12 sind so bemessen, daß das Wischblatt 16 gegenüber dem Wischerarm 12 um die Schwingachse 40 lediglich eine begrenzte Schwingbewegung (Doppelpfeil 42) ausführen kann. Diese noch zulässige Schwingbewegung beziehungsweise der noch zulässige Schwingwinkel ist auf maximal 45 Grad begrenzt. Die Sicherungsvorrichtung, zu der die einander zugewandten Innenflächen 70 der zungenartigen Verlängerungen 62 und auch die diesen Innenflächen zugewandten Bandflächen 72 des Vorsprungs der einen Federschiene 26 bilden somit sich vom einen Teil 12 der Wischvorrichtung 10 sich zum anderen Vorrichtungsteil 16 hin erstreckende in Schwingrichtung mit Abstand voneinander befindliche Anschläge 70 beziehungsweise 72 die mit am anderen Vorrichtungsteil vorhandenen Gegenanschlägen 72 beziehungsweise 70 zusammenarbeiten und dabei die Schwingbewegung des Wischblatts in Bezug auf den Wischerarm begrenzen. Dabei sind die Anschläge - nämlich die Innenflächen 70 am Wischerarm mit Hilfe der Klammer 60 angeordnet, während die Gegenanschläge, die Bandflächen 72 der Federschienen 26, am Wischblatt 16 ausgebildet sind. Weil die Federschienen 26 sich in einer gemeinsamen, von der Scheibenoberfläche 33 beabstandeten Ebene befinden, sind auch die zungenartigen Verlängerungen 62 der Klammer 60 mit einem Abstand 67 von der Scheibe angeordnet. Damit die zu einem ordnungsgemäßen Wischbetrieb erforderliche Schwingbewegung (Doppelpfeil 42 in den Figuren 1 und 3) möglich ist, ist der Abstand 68 zwischen den einander zugewandten Innenflächen 70 der Zungen 62 größer als der Abstand 71 zwischen den am Wischblatt vorhandenen sich zwischen den Zungen befindlichen Band- oder Gegenanschlagflächen 72 des Wischblatts 16. Weiter ist bei der Anordnung der Sicherungsvorrichtung darauf zu achten, daß die erforderliche maximale Schwingbewegung des Wischblatts nicht einseitig durch eine der beiden zungenartigen Verlängerungen 62 gestört beziehungsweise begrenzt wird.

Eine einfache Montage der Klammer 60 am Wischerarm 12 kann dadurch erreicht werden, daß wie beim Ausführungsbeispiel die Klammer 60 aus einem elastischen Kunststoff hergestellt ist, so daß durch Auseinanderbiegen der beiden U-Schenkel 64 der Klammer 60 diese auf den Wischerarm aufgeklemmt werden kann. Diese Aufklemmbewegung kann durch eine rampenförmig ausgebildete Rastnase 74 unterstützt werden. Zur Sicherung der Klammer 60 in Längsrichtung des Wischerarms muß diese mit wenigstens einer in Längsrichtung des Wischerarms weisenden Sicherungsschulter versehen werden, die mit einer ihr zugewandten Gegenschulter des Wischerarms zusammenwirkt. Im Ausführungsbeispiel ist dies dadurch erreicht, daß der eine U-Schenkel 64 der Klammer 60 mit einem zapfenartigen Vorsprung 76 versehen ist, der beim Aufrasten in eine Rastbohrung 78 des Wischerarms gelangt. Dabei bilden die Mantelfläche des Vorsprungs 76 und die Wand der Rastbohrung 78 miteinander zusammenwirkenden Sicherungsschultern und Gegenschultern.

Beim Aufrasten der Klammer 60 auf den Wischerarm 12 ist darauf zu achten, daß die Bandflächen 72 der dem Wischerarm benachbarten Federschiene 26 zwischen die zungenartigen Verlängerungen 62 der Klammer gelangen. Um das Wischblatt 16 von dem Wischerarm 12 zu lösen, kann beispielsweise das Wischblatt gegenüber dem Wischerarm unter einem bestimmten Kraftaufwand in eine Richtung des Doppelpfeils 42 gedreht werden, damit eine der beiden Zungen 62 vorrübergehend elastisch auslenkt und das Wischblatt zur weiteren Demonatebewegung freigibt. Natürlich kann dazu auch die Klammer 60 vom Wischerarm entfernt werden.

## Patentansprüche

1. Wischvorrichtung für Scheiben von Kraftfahrzeugen mit einem zwischen Umkehrlagen bewegbaren zur Scheibe (20) belasteten, ein erstes Vorrichtungsteil bildenden Wischerarm (12), an dessen freien Ende ein um eine im wesentlichen in Wischrichtung (Doppelpfeil 38) weisende Achse (40) schwingbares, ein zweites Vorrichtungsteil bildenden Wischblatt (16) angelenkt und zusammen mit dem Wischerarm quer zur Wischrichtung aus seiner Arbeitsposition in eine Montageposition bewegbar ist und mit Mitteln zum Begrenzen der Schwingbewegung, wobei das Wischblatt (16) in Draufsicht gesehen neben dem Wischerarm (12) angeordnet ist und zumindest an einem der beiden Vorrichtungsteile (12 beziehungsweise 16) sich zum anderen Vorrichtungsteil (16 beziehungsweise 12) hin erstreckende, in Schwingrichtung mit Abstand (68) voneinander befindliche Anschläge (70 bzw. 72) angeordnet sind, die mit dort vorhandenen Gegenanschlägen (72 bzw. 70) zusammenarbeiten und dabei die Schwingbewegung (Doppelpfeil 42) des Wischblatts (16) in bezug auf den Wischerarm (12) auf maximal 45 Grad begrenzen, wobei ferner die Anschläge (70) am Wischerarm (12) angeordnet und die Gegenanschläge (72) am Wischblatt (16) ausgebildet sind, **dadurch gekennzeichnet, daß** an dem Wischerarm (12) zwei sich zum Wischblatt (16) erstreckende, die Anschläge bildende Zungen (62) angeordnet sind, welche sich mit Abstand (67) von der Scheibe in die Schwingebene des Wischblatts erstrecken und daß der zur Scheibe (20) senkrecht gemessene Abstand (68) zwischen den einander zugewandten Zungenflächen (70) größer ist als der Abstand zwischen den am Wischblatt vorhandenen, sich zwischen den Zungen befindlichen Gegenanschlägen (72) des Wischblatts.

2. wischvorrichtung nach Anspruch 1, bei der das Wischblatt (16) mit Abstand von der zu wischenden Scheibe (20) mit einem bandartig langgestreckten, federelastischen Tragelement (18) für eine an der Scheibe anlegbare, gummielastische Wischleiste (30) versehen ist, **dadurch gekennzeichnet, daß** sich das Tragelement (18) mit einem Vorsprung über die Breite der Wischleiste (30) hinaus zwischen die einander zugewandten Flächen (70) der Zungen erstreckt und daß an dem Vorsprung die Gegenanschläge des Wischblatts ausgebildet sind.

3. Wischvorrichtung nach einem der Ansprüche 1 oder 2, **dadurch gekennzeichnet, daß** die beiden Zungen durch verlängerungen der Schenkel (64) einer am Wischerarm befestigten, den Wischerarm umgreifenden, im Querschnitt U-förmigen Klammer (60) gebildet sind.

4. Wischvorrichtung nach Anspruch 3, **dadurch gekennzeichnet, daß** die Klammer (60) zumindest eine in Längsrichtung des Wischerarms (12) weisende Sicherungsschulter (76) hat, die mit einer ihr zugewandten Gegenschulter (78) des Wischerarms (12) zusammenwirkt.

5. Wischvorrichtung nach einem der Ansprüche 3 oder 4, **dadurch gekennzeichnet, daß** die Klammer (60) aus einem elastischen Kunststoff hergestellt ist.

6. Wischvorrichtung nach einem der vorhergehenden Ansprüche, **gekennzeichnet durch** zwei zum Schwinggelenk (40) gehörende, aus den Längsseiten des Wischblatts (16) ragende, miteinander fluchtende, im Querschnitt unrunde, in randoffenen Ausnehmungen (46) des wischerarms (12) geführte Lagerzapfen (44).

## Revendications

1. Dispositif d'essuie-glace de véhicule automobile comportant un bras (12) poussé contre la vitre (20) et mobile entre des positions d'inversion de mouvement, ce bras constituant une première partie du dispositif ayant son extrémité libre qui reçoit de façon articulée un balai d'essuie-glace (16) pivotant autour d'un axe (40) dirigé principalement dans la direction d'essuyage (double flèche 38), ce balai (16) constituant la seconde partie du dispositif pour être déplacée avec le bras d'essuie-glace transversalement à la direction d'essuyage d'une position de travail dans une position de montage, et des moyens pour limiter le mouvement de basculement,
le balai d'essuie-glace (16) étant situé en vue de dessus à côté du bras (12) avec sur au moins l'une des deux parties du dispositif (12, 16) des butées (70, 72) écartées l'une de l'autre de la distance (68) dans la direction de basculement, et s'étendant vers l'autre partie (16) ou (12) du dispositif, ces butées coopérant avec des contrebutées (72, 70) pour limiter le mouvement de basculement (double flèche 42) du balai d'essuie-glace (16) par rapport au bras (12) à un maximum de 45°, avec en outre les butées (70) prévues sur le bras (12) et les contrebutées (72) sur le balai d'essuie-glace (16),
**caractérisé en ce que**
le bras (12) comporte deux languettes (62) formant les butées et dirigées vers le balai d'essuie-glace (16), ces languettes s'étendant à la distance (67) de la vitre dans le plan de basculement du balai d'essuie-glace, et la distance (68), mesurée perpendiculairement à la vitre (20) entre les surfaces des languettes (70) tournées l'une vers l'autre, est supérieure à la distance entre les contrebutées (72) du balai d'essuie-glace se trouvant entre les languettes.

2. Dispositif d'essuie-glace de véhicule automobile comportant un bras selon la revendication 1, selon lequel le balai d'essuie-glace (16) est muni à distance de la vitre (20) essuyée, d'un élément de support (18) élastique comme un ressort, allongé, en forme de ruban, pour une lame d'essuie-glace (30) élastique comme du caoutchouc, appliquée contre la vitre,
**caractérisé en ce que**
l'élément de support (18) déborde de la largeur de la lame d'essuie-glace (30) entre les surfaces en regard (70) de la languette, et les contrebutées du balai d'essuie-glace sont réalisées sur la partie en saillie.

3. Dispositif d'essuie-glace de véhicule automobile comportant un bras selon l'une des revendications 1 ou 2,
**caractérisé en ce que**
les deux languettes sont formées par l'allongement des branches (64) d'une pince (60) à section en forme de grand U, fixées au bras et entourant le bras.

4. Dispositif d'essuie-glace de véhicule automobile comportant un bras selon la revendication 3,
**caractérisé en ce que**
la pince (60) a un épaulement de fixation (76) dirigé au moins dans la direction longitudinale du bras (12) et qui coopère avec un contre-épaulement (78) du bras (12) tourné vers la pince.

5. Dispositif d'essuie-glace de véhicule automobile comportant un bras selon l'une des revendications 3 ou 4,
**caractérisé en ce que**
la pince (60) est fabriquée dans une matière plastique élastique.

6. Dispositif d'essuie-glace de véhicule automobile comportant un bras selon l'une des revendications précédentes,
**caractérisé par**
deux tourillons de palier (44) appartenant à l'articulation de basculement (40), venant en saillie des grands côtés du balai d'essuie-glace (16), alignés l'un sur l'autre, de section non ronde, et qui sont guidés dans les cavités à bord ouvert (46) du bras d'essuie-glace (12).

## Claims

1. Wiping apparatus for panes of motor vehicles, having a wiper arm (12) which can be moved between reversal positions, is loaded towards the pane (20), forms a first apparatus part and at the free end of which a wiper blade (16) is articulated which can be swung about an axis (40) which points substantially in the wiping direction (double arrow 38), the said wiper blade (16) forming a second apparatus part and it being possible for it to be moved, together with the wiper arm, transversely with respect to the wiping direction, out of its working position into an assembly position, and having means for limiting the swinging movement, the wiper blade (16) being arranged next to the wiper arm (12) as seen in the plan view, and stops (70 and 72) being arranged at least on one of the two apparatus parts (12 and 16), which stops (70 and 72) extend towards the other apparatus part (16 or 12), are situated at a spacing (68) from one another in the swinging direction, interact with corresponding stops (72 and 70) present there, and in the process limit the swinging movement (double arrow 42) of the wiper blade (16) to a maximum of 45 degrees in relation to the wiper arm (12), the stops (70) furthermore being arranged on the wiper arm (12) and the corresponding stops (72) being formed on the wiper blade (16), **characterized in that** two tongues (62) are arranged on the wiper arm (12), which tongues (62) extend towards the wiper blade (16), form the stops and extend at a distance (67) from the pane into the swinging plane of the wiper blade, and **in that** the spacing (68), measured perpendicularly with respect to the pane (20), between the mutually facing tongue faces (70) is greater than the spacing between the corresponding stops (72) of the wiper blade which are present on the wiper blade and are situated between the tongues.

2. Wiping apparatus according to Claim 1, in which the wiper blade (16) is provided, at a spacing from the pane (20) which is to be wiped, with a resilient carrier element (18) which is elongated in the manner of a belt for a resilient wiper strip (30) which can be placed against the pane, **characterized in that** the carrier element (18) extends with a projection beyond the width of the wiper strip (30) between the mutually facing faces (70) of the tongues, and **in that** the corresponding stops of the wiper blade are formed on the projection.

3. Wiping apparatus according to either of Claims 1 and 2, **characterized in that** the two tongues are formed by extensions of the limbs (64) of a clip (60) which is fastened to the wiper arm, encloses the wiper arm and has a U-shaped cross section.

4. Wiping apparatus according to Claim 3, **characterized in that** the clip (60) has at least one securing shoulder (76) which points in the longitudinal direction of the wiper arm (12) and interacts with a corresponding shoulder (78), facing it, of the wiper arm (12).

5. Wiping apparatus according to either of Claims 3 and 4, **characterized in that** the clip (60) is manufactured from an elastic plastic.

6. Wiping apparatus according to one of the preceding claims, **characterized by** two bearing journals (44) which belong to the swinging joint (40), protrude from the longitudinal sides of the wiper blade (16), are aligned with one another, are of non-round cross section and are guided in recesses (46) of the wiper arm (12) which are open at the edges.
